Europäisches Patentamt

European Patent Office

Office européen des brevets

(11) Veröffentlichungsnummer : **0 349 820 B1**

# (12) EUROPÄISCHE PATENTSCHRIFT

(45) Veröffentlichungstag der Patentschrift :
**19.04.95 Patentblatt 95/16**

(21) Anmeldenummer : **89111121.3**

(22) Anmeldetag : **19.06.89**

(51) Int. Cl.⁶ : **G06F 15/80**

(54) **Netzwerk -Baustein und Architektur für die programmierbare Emulation künstlicher neuronaler Netze mit digitaler Arbeitsweise.**

(30) Priorität : **05.07.88 DE 3822758**

(43) Veröffentlichungstag der Anmeldung :
**10.01.90 Patentblatt 90/02**

(45) Bekanntmachung des Hinweises auf die Patenterteilung :
**19.04.95 Patentblatt 95/16**

(84) Benannte Vertragsstaaten :
**DE FR GB IT**

(56) Entgegenhaltungen :
**US-A- 4 338 675**
**IEEE FIRST INTERNATIONAL CONFERENCE ON NEURAL NETWORKS, San Diego, California, 21.-24. Juni 1987, Seiten III/403-410, IEEE, New York, US; A. AGRANAT et al.: "A new architecture for a microelectronic implementation of neural network models"**
**IEEE FIRST INTERNATIONAL CONFERENCE ON NEURAL NETWORKS, San Diego, California, 21.-24. Juni 1987, Seiten III/427-434, IEEE, New York, US; C.A. CRUZ et al.: "Neural network emulation hardware design considerations"**
**IEEE FIRST INTERNATIONAL CONFERENCE ON NEURAL NETWORKS, San Diego, California, 21.-24. Juni 1987, Seiten IV/517-524, IEEE, New York, US; G. JOSIN: "Combinations of neural systems for particular application situations"**
**COMPUTER, Band 21, Nr. 3, März 1988, Seiten 11-22, IEEE, New York, US; T.KOHONEN: "The 'neural' phonetic typewriter"**
**THE TRANSACTIONS OF THE IECE OF JAPAN, Band E69, Nr. 4, April 1986, Seiten 549-557, Tokyo, JP; Y. HIRAI: "On a model of human associative processor HASP"**

(56) Entgegenhaltungen :
**IEEE TRANSACTIONS ON ACOUSTICS, SPEECH, AND SIGNAL PROCESSING, Band 36, Nr. 7. Juli 1988, Seiten 1180-1190, IEEE, New York, US; J.J. VIDAL: "Implementing neural nets with programmable logic"**
**PROCEEDINGS OF THE TWENTY-SECOND ANNUAL ALLERTON CONFERENCE ON COMMUNICATION, CONTROL, AND COMPUTING, Monticello, Illinois, 3.-5. Oktober 1984, Seiten 940-945; M.A. HADDAD et al.: "A systolic architecture based on adders for digital signal processor"**
**PROCEEDINGS OF THE ICASSP '81, IEEE INTERNATIONAL CONFERENCE ON ACOUSTICS, SPEECH AND SIGNAL PROCESSING, Atlanta, Georgia, 30. März - 1. April 1981, Band 2, Seiten 658-661, IEEE, New York, US; S.A. WHITE: "Architecture for a digital programmable image processing element"**
**IEEE ASSP MAGAZINE, April 1987, Seiten 4-22, IEEE, New York, US; R.P. LIPPMANN: "An introduction to computing with neural nets"**

(73) Patentinhaber : **SIEMENS AKTIENGESELLSCHAFT**
**Wittelsbacherplatz 2**
**D-80333 München (DE)**

(72) Erfinder : **Knauer, Karl, Dr.**
**Nockherweg 21**
**D-8018 Grafing (DE)**
Erfinder : **Ramacher, Ulrich, Dr.**
**Deisenhofener Strasse 4**
**D-8000 München 90 (DE)**
Erfinder : **Pandel, Jürgen, Dr.**
**Schlossweg 17a**
**D-8152 Feldkirchen-Westerham 2 (DE)**

## Beschreibung

Die vorliegende Erfindung betrifft einen Netzwerk Baustern und eine Netzwerk-Architektur für die programmierbare Emulation großer künstlicher neuronaler Netze KNN mit digitaler Arbeitsweise.

Künstliche neuronale Netze (im folgenden als KNN bezeichnet) sind prädestiniert für die parallele Verarbeitung sehr großer Datenmengen mit dem Ziel der Mustererkennung und -verarbeitung (beispielsweise von Sprache oder Bildern). Ein solches KNN besteht aus einer Vielzahl nichtlinearer Prozessorelemente (Neuronen), die über variable "Gewichtsfaktoren" miteinander vernetzt sind.

Für die Modellierung der Neuronen sind in der Literatur folgende nichtlineare Übertragungscharakteristiken vorgeschlagen worden, vergl. R. P. Lippmann: "An introduction to computing with neural nets" IEEE ASSP Magazine, April 1987, S. 4...'22:

- binäre Entscheider,
- lineare Rampenfunktion mit Sättigungscharakteristik,
- Sigmoidal-Funktion,
- Tangens-Hyperbolicus-Funktion.

Desweiteren existiert eine Vielzahl unterschiedlicher Strukturen für die Vernetzung der Neuronen (z.B. "Hopfield-Netz", "Hamming-Netz", "Perceptron", vergl. ebenfalls R.P. Lippmann. Eine unmittelbare digitale Realisierung großer derartiger Netze scheint mit den heutigen Technologien zur Herstellung integrierter Schaltungen wegen der erforderlichen Vielzahl von Neuronen ( > 1000) unmöglich zu sein. Das Hauptproblem dabei ist, daß die Zahl der Verbindungen und damit auch die Zahl der variablen Gewichtsfaktoren quadratisch mit der Zahl der Neuronen wächst. Beispielsweise sind bei 1000 Neuronen in einem vollständig vermaschten Netz 1 Millionen Gewichtungen erforderlich.

In der Literatur sind einige Realisierungen kleiner KNN mit beispielsweise 54 bzw. 256 Neuronen für ein programmierbares bzw. nicht-programmierbares Netz, vergl. H.P. Graf, P. de Vegvar: A CMOS associative memory chip based on neural networks. Proc. 1987 IEEE Int. Conf. an Solid-State Circuits, pp. 304, 305, 437;
H.P. Graf et al.: VLSI implementation of a neural network memory with several hundreds of neurons. AIP Conference Proceedings 151, "Neural Networks for Computing", S. 182-187, Snowbird, Utah, 1986;
W. Hubbard et. al.: Electronic neural networks. AIP Conference Proceedings 151, "Neural Networks for Computing", S. 227-234, Snowbird, Utah, 1986
und Realisierungsvorschläge, vergl. J.P. Sage, K. Thompson R.S. Withers: An artificial neural network integrated circuit based an MNOS/CCD principles. AIP Conference Proceedings 151, "Neural Networks for Computing", S. 381-384, Snowbird, Utah, 1986, beschrieben. Dabei handelt es sich durchwegs um analoge Realisierungen von analogen KNN. Gegenüber digitalen Realisierungen haben sie den Vorteil einer wesentlich kleineren Implementationsfläche. Nachteilig ist jedoch der hohe durch die erforderliche Widerstandsmatrix bedingte Stromverbrauch, der einer Realisierung von größeren, programmierbaren Netzen (mehr als einige hundert Neuronen) entgegensteht. Das Verhalten und die Eigenschaften der bisher vorgeschlagenen Modellierungen von KNN werden vornehmlich durch Simulation auf Vektorrechnern, Workstations oder speziellen Prozessorfeldern untersucht. Der grundsätzliche Nachteil dieses Weges besteht darin, daß die dem neuronalen Netz eigene (Raum-)Parallelität in der Verarbeitung der Information vollständig oder teilweise verloren geht und somit die Rechenzeit des simulierten Netzes insbesondere für große Neuronenverbände zu solchen Größenordnungen anwächst, daß eine zügige oder quasi-zeitechte Bearbeitung der zuvor genannten Aufgaben behindert oder unmöglich wird.

Eine wesentliche Verkürzung der Rechenzeit und einen sehr viel größeren Musterdurchsatz erhält man dagegen mit Hardware-Emulatoren. Im Gegensatz zu Hardware-Simulatoren enthalten sie ein künstliches neuronales Netz von kleiner Größe, mit dessen Hilfe ein größeres Netz emuliert werden kann.

Der Vorteil einer digitalen Realisierung eines KNN besteht neben einem höheren Durchsatz in der größeren Freiheit, mit der der Anwender netztypische Parameter (z.B. Diskriminatorfunktionen) auswählen und einstellen kann.

Da einerseits der Algorithmus eines neuronalen Netzes mit keiner Architektur schneller ausgeführt werden kann als mit der neuronalen und andererseits sich Netze mit nur wenigen 100 Neuronen wegen ihrer geringen Speicherkapazität einer sinnvollen Anwendung entziehen, sind bei dem Entwurf von digitalen Emulatoren für künstliche neuronale Netze (im folgenden als Neuro-Emulatoren bezeichnet) folgende Punkte besonders zu berücksichtigen:

Ein Neuro-Emulator sollte

- Neuronale Netze beliebigen Typs und von ausreichender Größe für die Anwendungen synthetisieren können (Modularität),
- die externe Programmierung der Gewichte und Schwellwerte erlauben oder selbst vornehmen,
- die bekannten Diskriminatorfunktionen enthalten,

- die Verzweigung oder Nicht-Verzweigung von Eingängen bzw. Ausgängen gestatten,
- die Rückkopplung der Ausgänge auf die (verzweigten oder nicht-verzweigten) Eingänge ermöglichen,
- einfachste Schnittstellen zur begleitenden Entwicklungsumgebung aufweisen und
- als Baustein für größere Emulatoren einsetzbar sein.

<u>Emulator-Architekturen für die Erkennungsphase</u>

1. Digitaler Grundbaustein für künstliche neuronale Netze
1.1 Neuronale Algorithmen
Künstliche neuronale Netze zeichnen sich durch eine einfache algorithmische Struktur in der sog. Erkennungsphase aus:

$$y_i = f\left(\left|\sum_{j=1}^{N} W_{ij} a_j + w_i b_i + \theta_i\right| \cdot \lambda\right) \quad, i = 1..M \tag{1}$$

Dabei beschreiben N die Zahl der allen Neuronen gemeinsamen Eingänge $a_j$ (im folgenden als verzweigende Eingänge bezeichnet; nicht vorhandene Verbindungen werden durch zu Null gesetzte Gewichte repräsentiert), M die Zahl der Neuronen des Netzes, die Matrix W die Gewichte für die verzweigenden Eingänge, $w_i$ das Gewicht des nicht-verzweigenden individuellen Eingangs des i-ten Neurons und $\theta_i$ seine Schaltschwelle. Schließlich bezeichnen f die Diskriminatorfunktion (d.h. den Kennlinientyp des Neurons) und $y_i$ den Ausgang des i-ten Neurons. Mit dem Parameter $\lambda$ kann die Diskriminatorfunktion versteilert oder verflacht und außerdem eine Boltzmann-Verteilung unterstützt werden. Ferner kann dieser Parameter für Normierungszwecke ausgenützt werden. Zu der algorithmischen Spezifikation eines neuronalen Netzes kommt ggf. hinzu, daß es sich um ein rückgekoppeltes Netz handelt: die Ausgänge $y_i$ sind mit den Eingängen $a_j$ bzw. $b_i$ verbunden. Formel (1) ist allgemeiner gehalten als für ein bestimmtes Modell eines künstlichen neuronalen Netzes zwingend ist; dafür erschließt sie die Behandlung aller bekannten Modelle, vergl. "Workshop on ARTIFICIAL NEURAL SYSTEMS", Veranstalter "State of the art", München 1987, wenn man statt $a_j$ den Ausdruck

$$\prod_{k=1}^{J} a_k$$

in (1) einfügt.
2. Notwendigkeit der Emulation von neuronalen Netzen Die in (1) enthaltene algorithmische Parallelität kann ohne Einschränkung hardwaremäßig genutzt werden, wenn es sich um kleine neuronale Netze handelt. Es können derzeit programmierbare Netze mit 54 Neuronen und nichtprogrammierbare Netze mit 256 Neuronen analog realisiert werden, vergleiche H. P. Graf et al: VLSI implementation of a neural network memory with several hundreds of neurons. AIP Conf. Proceedings 151, "Neural Networks for Computing", S. 182 - 187, Snowbird, Utah, 1986 und H. P. Graf, P. de Vegvar: A CMOS associative memory chip based an neural networks, Proc. 1987 IEEE Int. Conf. on Solid-State Circuits, pp. 304, 305, 437. Die digitale Realisierung erlaubt hingegen nur, ca. ein Dutzend Neuronen auf einem Chip unterzubringen. Es ist abzusehen, daß mit zukünftiger Submikron-Technologie oder mit der Very Large Area Integration, vergleiche U. Ramacher: Wege zur Großintegration - diskrete und redundante Wafer Scale Integration. ITG Fachberichte, Bd. 98, "Großintegration", S. 81 - 91, Baden-Baden, 1987 und U. Ramacher: A cost oriented redundancy model for defect-tolerant VLSI/WSI systems. Proc. of the Workshop on Designing for Yield, Oxford, Juli 1987,kaum mehr als einige hundert Neuronen in einem Chip digital realisiert werden können. Auf die analoge Realisierung wird es bei den derzeitigen Architekturvorschlägen wegen des mit der Zahl der Neuronen quadratisch ansteigenden Leistungsbedarfs (augenblicklich 250 mW für 54 Neuronen, vergl. H. P. Graf et al: VLSI implementation of a neural network memory with several hundreds of neurons. AIP Conf. Proceedings 151, "Neural Networks for Computing", S. 182 - 187, Snowbird, Utah, 1986 und H.P. Graf, P. de Vegvar: A CMOS associative memory chip based an neural networks. Proc. 1987 IEEE Int. Conf. on Solid-State Circuits, pp. 304, 305, 437) schwer haben, die für die Anwendung von programmierbaren neuronalen Netzen maßgebliche untere Schwelle von ca. 1000 Neuronen zu erreichen.
Beiden Realisierungsmoglichkeiten gemeinsam ist überdies das Bus- und/oder Pinproblem. Betrachtet man beispielsweise ein rückgekoppeltes Hopfield-Netz von 256 analog realisierten Neuronen, so ergäbe sich pro Eingang eine Bandbreite von ca. 3 MHz, vergleiche H.P. Graf et al: VLSI implementation of a neural network memory with several hundreds of neurons,

AIP Conf. Proceedings 151, "Neural Networks for Computing", S. 182 - 187, Snowbird, Utah, 1986 und H.P. Graf, P. de Vegvar: A CMOS associative memory chip based an neural networks. Proc. 1987 IEEE Int. Conf. on Solid-State Circuits, pp. 304, 305, 437. Da die nötige Zahl von Pins nur mit teuren Spezial-Gehäusen zur Verfügung steht, müßten spezielle Schnittstellen-Bausteine entwickelt werden, um den Geschwindigkeitsvorteil der massiven Parallelität überhaupt wahrnehmen zu können.

Der vorliegenden Erfindung liegt die Aufgabe zugrunde, eine Netzwerk-Architektur der eingangs genannten Art zum Aufbau großer digitaler neuronaler Netze zu schaffen, die es gestattet, kleine Neuron-Einheiten, die mittels der derzeit zur Verfügung stehenden technologischen Möglichkeiten realisiert werden können, zu verwenden.

Zur Lösung der Aufgabe wird ein digitaler Grundbaustein gemäß dem Patentanspruch 1 vorgeschlagen. Eine entsprechende Netzwerk architektur wird im Anspruch 5 vorgeschlagen.

Vorteilhafte Weiterbildungen der Erfindung sind durch die in den Unteransprüchen angegebenen Merkmale gekennzeichnet.

Erfindungsgemäß ist ein kleines neuronales Netz mit m Neuronen und $m^2$ Multiplizierern für die Gewichtung vorgesehen. Die gewählte Architektur gestattet eine schnelle Emulation beliebiger Netzstrukturen mit allen zuvor angegebenen nichtlinearen Übertragungscharakteristiken der künstlichen Neuronen.

Die erfindungsgemäße Hardware-Architektur ermöglicht es, große neuronale Netze mit kleineren solcher aufzubauen, für welche eine Hardware-Realisierung noch möglich ist. Mehrere dieser kleinen Netze können z.B. zu größeren zusammengefügt werden, oder es wird der Algorithmus (1) eines großen Netzes mit dem Algorithmus eines kleinen Netzes abgerastert. Letzteres bedeutet die Emulation eines großen Netzes mittels eines kleineren.

Die Dekomposition eines Netzes von M (z.B. 1000) Neuronen in kleineren Einheiten von m (z.B. = 4) Neuronen (m ist Teiler von N; N/m = : K) kann durch Umschreiben von (1) erreicht werden:

$$y_i = f\left(\left|\sum_{n=0}^{K-1} \sum_{j=nm+1}^{(n+1)m} W_{ij} a_j + w_i b_i + \theta_i\right| \cdot \lambda\right) \qquad , i = 1..M \qquad (2)$$

Im folgenden werden verschiedene Ausführungsbeispiele der Erfindung anhand mehrerer Figuren beschrieben.

| | |
|---|---|
| Fig. 1 | zeigt die Architektur einer erfindungsgemäßen 4-Neuron-Einheit. |
| Fig. 2 | zeigt eine schematische Darstellung des Datenflusses in einer 4-Neuron-Einheit. |
| Fig. 3 | zeigt eine weitere erfindungsgemäße 4-Neuron-Einheit mit gegenüber der 4-Neuron-Einheit gemäß Fig. 1 verringerter Anzahl von Eingängen. |
| Fig. 4a | zeigt ein erstes Beispiel für den Einsatz einer m-Neuron-Einheit in einem sog. Instar-Netz. |
| Fig. 4b | zeigt ein zweites Beispiel für den Einsatz einer m-Neuron-Einheit in einem sog. Outstar-Netz. |
| Fig. 4c | zeigt ein drittes Beispiel für den Einsatz einer m-Neuron-Einheit einer m-Neuron-Einheit in einem sog. Feedforward-Multilayer-Perceptron. |
| Fig. 4d | zeigt ein weiteres Beispiel für den Einsatz einer m-Neuron-Einheit in einem sog. Hopfield-Netz. |
| Fig. 5 | zeigt eine schematische Darstellung der Schnittstellen und der Speicherperipherie einer erfindungsgemäßen 4-Neuron-Einheit. |
| Fig. 6 | zeigt eine schematische Darstellung einer sog. systolischen Neuro-Emulator-Anordnung mit L m-Neuron-Einheiten. |
| Fig. 7 | zeigt eine schematische Darstellung des Datenflusses in einem sog. systolischen Neuro-Emulator. |
| Fig. 8 | zeigt eine schematische Darstellung der Schnittstellen und der Speicherperipherie eines zweiten Typs von Neuro-Emulator (Typ 2) gemäß der vorliegenden Erfindung mit 250 4-Neuron-Einheiten. |
| Fig. 9 | zeigt eine schematische Darstellung einer sog. systolischen Neuro-Emulator-Anordnung mit P m-Neuron-Einheiten. |

| Fig. 10a, 10b, 10C und 10d | zeigen verschiedene Kennlinientypen einer Diskriminator-Einheit gemäß der vorliegenden Erfindung. |
| Fig. 11 | zeigt ein Blockschaltbild, aus dem der Aufbau einer erfindungsgemäßen Diskriminator-Einheit hervorgeht. |
| Fig. 12 | zeigt eine schematische Darstellung einer seriellen Multiplikationseinheit. |
| Fig. 13 | zeigt ein schematisches Schaltbild eines sog. Sättigungsmultiplexers. |
| Fig. 14 | zeigt ein Blockschaltbild einer Schaltungsanordnung zur Realisierung einer Sigmoidal-Funktion gemäß Fig. 10. |
| Fig. 15 | zeigt ein Prinzipschaltbild einer Schaltungsanordnung zur Realisierung einer linearen Transformation gemäß einer im folgenden angegebenen Gleichung (17). |

**Die 4-Neuron-Einheit-Funktionsweise**

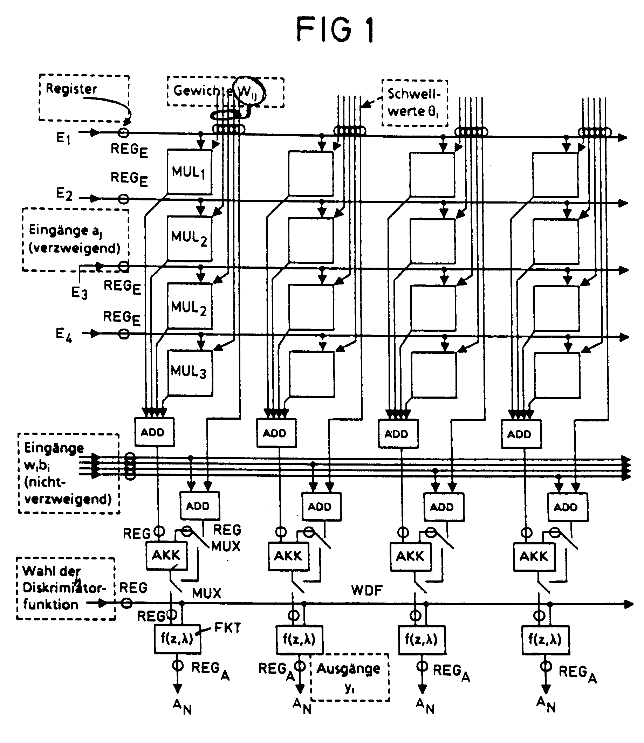

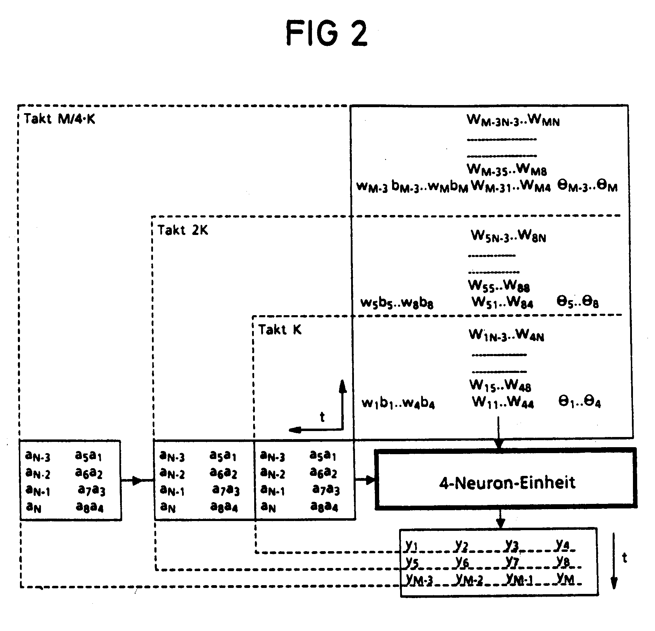

Fig. 1 und Fig. 2 zeigen am Beispiel eines Netzes mit N Eingängen und M Ausgängen Aufbau und Arbeitsweise einer Neuroneinheit mit m = 4 Neuronen mittels derer eine Abarbeitung des Ausdrucks (2) digital realisiert werden kann.

Fig. 1 zeigt die Architektur der 4-Neuron-Einheit. Hier besteht ein Neuron aus vier Multiplizierern, zwei Addierern, einem Akkumulator, zwei Multiplexern und einem Diskriminator (binäre, "linear ramp"-, sigmoidale und tanh-Kennlinien stehen zur Auswahl). Außerdem ist ein Multiplizierer vorgesehen, der unter anderem die Kennlinie der Sigmoidalfunktion versteilern und dadurch auch eine Boltzmann-Verteilung unterstützen kann. Zu Beginn einer Berechnung von (2), n = 0, j = 1, werden parallel zu der Gewichtung der verzweigenden Eingänge die Ausdrücke "$w_i b_i + \theta_i$", i=1 bis 4 gebildet und der Akkumulator AKK im folgenden Takt mittels des auf den Addierer ADD folgenden Multiplexers auf diesen Wert voreingestellt. In den folgenden K-1 Takten (K = N/m) schließen die beiden Multiplexer den Akkumulationspfad, und es wird die Doppelsumme von (2) errechnet. Schließlich wird im (K + 1)-ten Takt der Akkumulator ausgelesen (das Argument von f ist berechnet für $\lambda$ = 1) und dem Diskriminator zugeführt. An den vier Ausgängen erscheinen somit die ersten vier von M Ausgangsvektoren nach K Takten (Register sind nicht berücksichtigt) und nach weiteren K Takten die nächsten vier Ausgangsvektoren, usw.. Insgesamt ist dieser Vorgang M/m-mal durchzuführen.

Fig. 2 zeigt, in welchem zeitlichen Rhythmus Eingangsvektoren, Gewichte und Schwellwerte der 4-Neuron-Einheit zugeliefert werden müssen und Ausgangsvektoren erscheinen. Dies gilt für ein beliebig strukturiertes Netz ohne Rückkopplung. Für den Fall eines rückgekoppelten Netzes werden die Ausgangsvektoren zunächst in einem lokalen Speicher abgelegt. Dieser wird sodann auf die verzweigenden bzw. nicht-verzweigenden Eingänge (je nach Neuron-Modell) ausgelesen, und der zuvor erläuterte Ablauf wiederholt sich mit denselben Gewichten, Schwellwerten usw.. (Es sei angemerkt, daß analog realisierte Emulatoren rückgekoppelte größere Netze auch nicht anders als durch Iteration emulieren können).

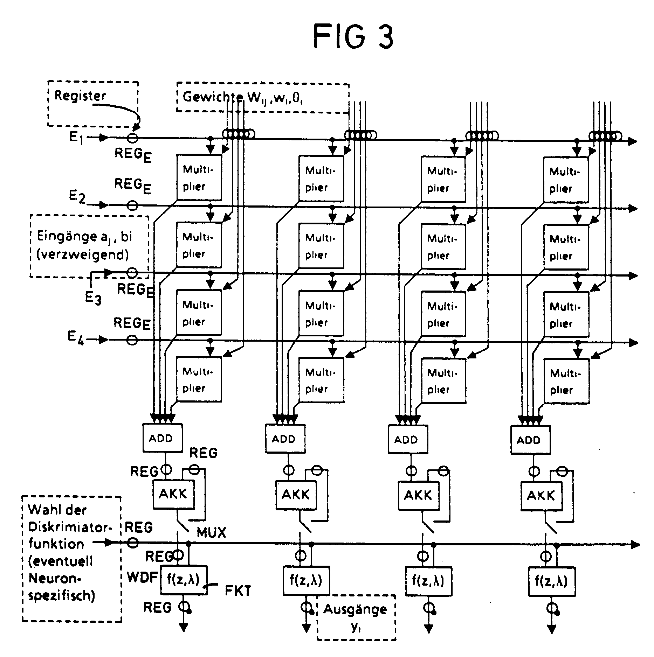

Die Leitungen für Schwellwerte und nicht-verzweigende Eingänge können eingespart werden, wenn zusätzliche Takte aufgewendet werden. Legt man beispielsweise an die verzweigenden Eingänge zunächst $b_1$, $b_2$ $b_3$, $b_4$ und an die Gewichtseingänge ($w_1$000), (0$w_2$00), (00$w_3$0), (000$w_4$) und ersetzt im nächsten Takt $b_i$ bzw. $w_i$ durch 1 bzw. $\theta_i$, so wird $w_i b_i + \theta_i$ berechnet. Darauf folgt dann, wie beschrieben, die Gewichtung der verzweigenden Eingänge. Insgesamt erhöht sich die Rechenzeit um 2 M/m Takte. Auf diesem Wege können 64 Pads und vier Addierer eingespart werden, vergl. Fig. 3.

**Durchsatz und Rechenzeit einer 4-Neuron-Einheit**

Um mit einer m-Neuron-Einheit alle M Ausgangsvektoren für ein "feedfordward"-Netz zu berechnen, bedarf es einer Anzahl von (N/m) · (M/m) Takten. Man erkennt, daß die Rechenzeit (entspricht dem Durchsatz bei Verwendung einer einzigen m/Neuron-Einheit) umgekehrt proportional ist zum Quadrat der in der Einheit befindlichen Neuronen. Es ist jedoch zu berücksichtigen, daß die Zahl der 8-bit-Eingänge für Gewichte, Schwellwerte, Eingangs- und Ausgangsvektoren proportional zu $4m + m^2$ wächst.

Auf der Basis von in 1.5 $\mu$m-Technologie entworfenen Multiplizierern läßt sich abschätzen, daß eine Taktzeit von < 50 ns für eine 4-Neuron-Einheit erreichbar ist. Somit können mit der 4-Neuron-Einheit $10^6$ bzw. $10^8$ Verbindungen in 3 ms bzw. 0.3 s klassifiziert werden. Für rückgekoppelte Netze müssen die zuvor genannten Zeiten noch mit der Zahl der Iterationen multipliziert werden.

**Beispiele für den Einsatz der m-Neuron-Einheit**

1. Beispiel: Instar (N > M):

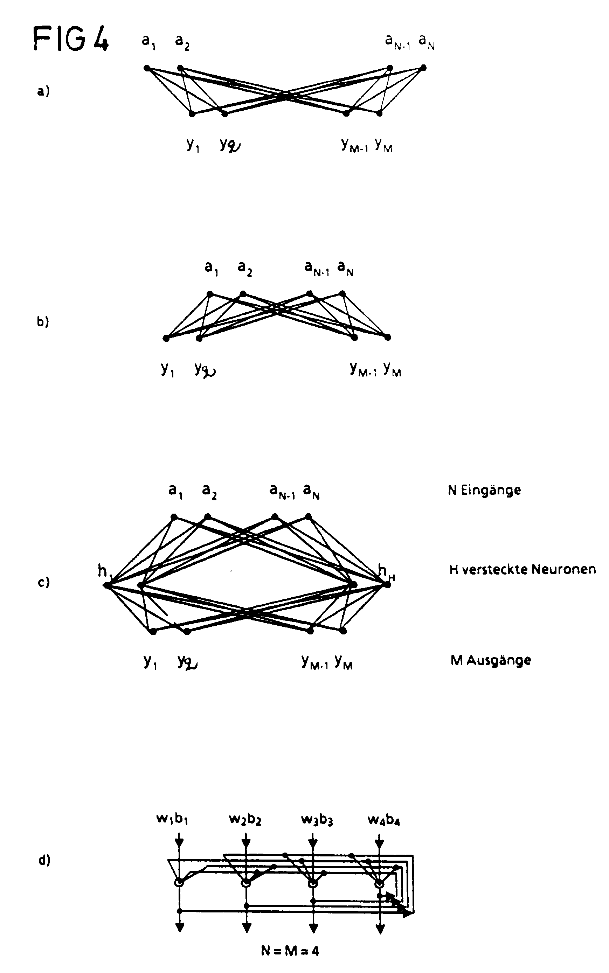

Die Matrix der Gewichte hat den Rang MxN, die Rechenzeit beträgt N·M/m² 50 ns, vergl. Fig. 4a.

2. Beispiel: Outstar (N < M)

Die Matrix der Gewichte hat den Rang MxN, die Rechenzeit beträgt N·M/m² 50 ns, vergl. Fig. 4b.

3. Beispiel: Feedforward-Multilayer-Perceptron

Es sind N Eingänge, H versteckte Neuronen und M Ausgänge vorgesehen, vergl. Fig. 4c. Bei Realisierung mit einer einzigen m-Neuron-Einheit wird zunächst ein Ausdruck

$$h_i = f\left(\left|\sum_{n=0}^{K-1}\sum_{j=nm+1}^{(n+1)m} W_{ij}a_j + w_i b_i + \theta_i\right|\cdot \lambda\right) \qquad , i = 1..H, \quad K = N/m \qquad (3)$$

abgearbeitet, dann die Ausgangsvektoren $h_i$ an die verzweigenden Eingänge gelegt und ein Ausdruck

$$y_i = g\left(\left|\sum_{n=0}^{K-1}\sum_{j=nm+1}^{(n+1)m} G_{ij}h_j + \gamma_i\right|\cdot \sigma\right) \qquad , i = 1..M, \quad K = H/m \qquad (4)$$

ausgeführt. Die Rechenzeit beträgt (N H/m² + H M/m²) 50 ns.

4. Beispiel: "Ordered feedback" Multilayer-Perceptron

Die nullte Iterationsstufe wird beschrieben durch die sequentielle Abarbeitung der Ausdrücke (3), $b_i = \theta$, und (4). Für die erste Iteration werden die Größen $b_i$ durch $y_i$ ersetzt (an der Rückkopplung nicht teilnehmende Neuronen bekommen das Gewicht w = 0) und die Ausgangsvektoren $y^{(1)}_i$ der ersten Iteration errechnet. Für die zweite Iteration werden die Größen $y_i$ durch die Größen $y^{(1)}_i$ ersetzt und die Ausgangsvektoren $y^{(2)}_i$ der zweiten Iteration errechnet, usf.. Die vollständige Iteration bzw. Rückkopplung wird beschrieben durch das rekursive System:

$$h^{(t)}_i = f\left(\left|\sum_{n=0}^{K-1}\sum_{j=nm+1}^{(n+1)m} W_{ij}a_j + w_i y^{(t)}_i + \theta_i\right|\cdot \lambda\right) \qquad , i = 1..H, \quad K = N/m \qquad (5)$$

$$y^{(t+1)}_i = g\left(\left|\sum_{n=0}^{K-1}\sum_{j=nm+1}^{(n+1)m} G_{ij}h^{(t)}_j + \gamma_i\right|\cdot \sigma\right) \qquad , i = 1..M, \quad K = H/m \qquad (6)$$

Dabei ist $1 \leqq t \leqq T$ der Iterationsindex.

5. Beispiel: Rückgekoppeltes Hopfield-Netz

Fig. 4d zeigt ein Beispiel für ein derartiges rückgekoppeltes Hopfield-Netz mit N = M = 4.

Während der nullten Iteration wird keine Gewichtung vorgenommen. Es wird ein Ausdruck

$$y^{(1)}_i = f\left(\left|w_i b_i + \theta_i\right|\cdot \lambda\right) \qquad , i = 1..M \qquad (7)$$

berechnet. In der ersten Iteration und allen folgenden wird sodann die Gewichtung der verzweigten Eingänge berücksichtigt und ein vollständiger Ausdruck

$$y^{(t+1)}_i = f\left(\left|\sum_{n=0}^{K-1}\sum_{j=nm+1}^{(n+1)m} W_{ij}y^{(t)}_j + w_i b_i + \theta_i\right|\cdot \lambda\right) \qquad , i = 1..M, \quad K = N/m \qquad (8)$$

berechnet für beliebig hohes $1 \leqq t \leqq T$.

## Schnittstellen und Speicherperipherie des 4-Neuron-Emulators

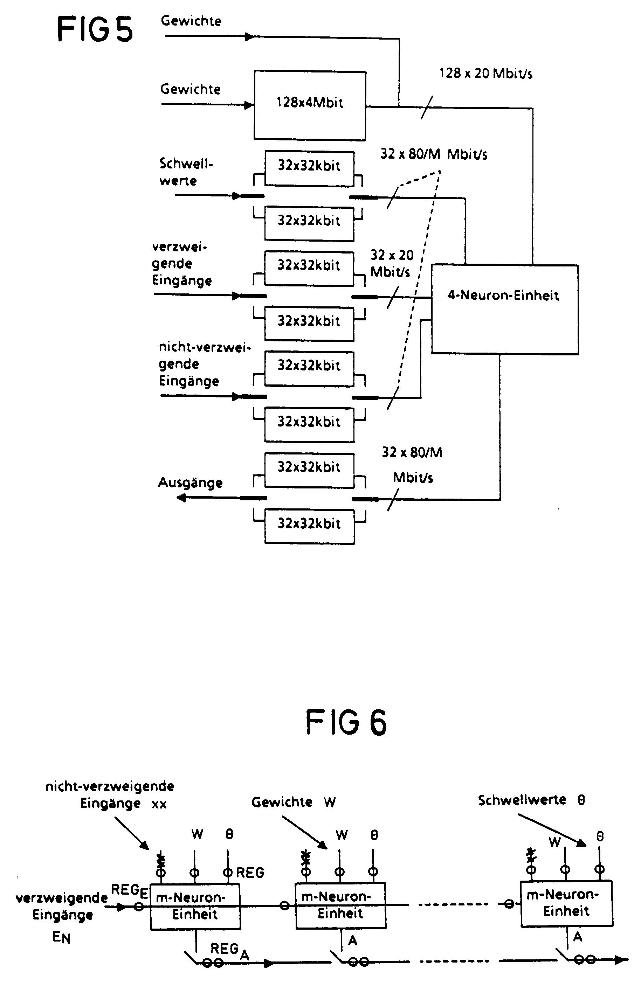

Um den zuvor beschriebenen Einsatz der m-Neuron-Einheit zu ermöglichen, muß der Grundbaustein mit entsprechenden Schnittstellen und Speichern ausgestattet sein. Fig. 5 zeigt die lokale Speicherperipherie des mit einer einzigen 4-Neuron-Einheit aufgebauten Neuro-Emulators "Typ 1". Sie ist ausgelegt für ein Netz mit maximal 100 000 Eingängen (begrenzt durch die Bitbreite des Akkumulators) und maximal 64 Millionen Gewichten (à 8 bit). Da das Produkt der Zahl der 8-bit-Eingänge und der Zahl der 8-bit-Ausgänge $\leqq 64 \cdot 10^6$ bleiben muß, ist noch eine "schnelle" Schnittstelle vorgesehen, über welche die Gewichte von außen eingelesen werden können. Nachteilig ist, daß die Schnittstelle $128 \cdot 20$ Mbit/s schnell sein muß. Der lokale Speicher erlaubt hingegen eine serielle Schnittstelle mit kleinerer Bandbreite.

Prinzipiell ist ein höherer sog. Pipeline-Grad für die m-Neuron-Einheit denkbar, und der Durchsatz könnte entsprechend gesteigert werden. Es ist jedoch zu beachten, daß die Übergabe der Gewichte entweder über eine sehr breite und schnelle Schnittstelle erfolgen muß oder durch Auslesen eines lokalen Speichers. Schon bei 50 ns Taktzeit ergibt sich pro Anschlußstift (Pin) und Bitleitung (bit-line) eine Datenrate von 20 Mbit/s.

## Leistungsmerkmale des Neuro-Emulators "Typ 1"

Gemessen an dem zuvor aufgestellten Forderungskatalog für die Leistungsmerkmale eines Neuro-Emulators sind folgende Eigenschaften erreichbar:

Der Neuro-Emulator "Typ 1"
- synthetisiert Netze beliebigen Typs mit maximal 100 000 Eingängen,
- bedarf der externen Programmierung der Gewichte und Schwellwerte und kann die Gewichte für 64 Millionen Verbindungen lokal speichern,
- enthält die bekannten Diskriminatorfunktionen,
- gestattet die Verzweigung oder Nicht-Verzweigung von Eingängen bzw. Ausgängen,
- ermöglicht die Rückkopplung der Ausgänge auf die (verzweigten oder nicht-verzweigten) Eingänge,
- weist einfache Schnittstellen zur begleitenden Entwicklungsumgebung auf,
- gewichtet und diskriminiert N Eingänge und M Ausgänge in $3 \cdot N \cdot M$ ns ($4 \leqq N, M$).

## Einbettung des Grundbausteins in lineare systolische Anordnungen

### Mehrfache Ausnutzung der Eingangsvektoren

Der beschriebene Grundbaustein eignet sich gut für die Einbettung in eine lineare systolische Anordnung vergl. T. Noll: Systolische Zellenfelder. ITG Fachberichte, Bd. 98, "Großintegration", S. 203 - 207, Baden-Baden, 1987 und U. Ramacher: "A self testing WSI matrix-matrix multiplier", Proc. of the IFIP Workshop on Wafer Scale Integration, Brunel, UK, Sept. 1987. Schaltet man L m-Neuron-Einheiten hintereinander, vergl. Fig. 6, so müssen die Eingangsvektoren a1...aN nicht mehr M/m-mal, sondern nur M/(Lm)-mal wiederholt werden. Auf diese Weise können große Neuro-Emulatoren mit $m \ast L$ Neuronen aufgebaut werden, welche ihrerseits sehr schnell noch größere neuronale Netze emulieren können.

### Funktionsweise des systolischen Neuro-Emulators

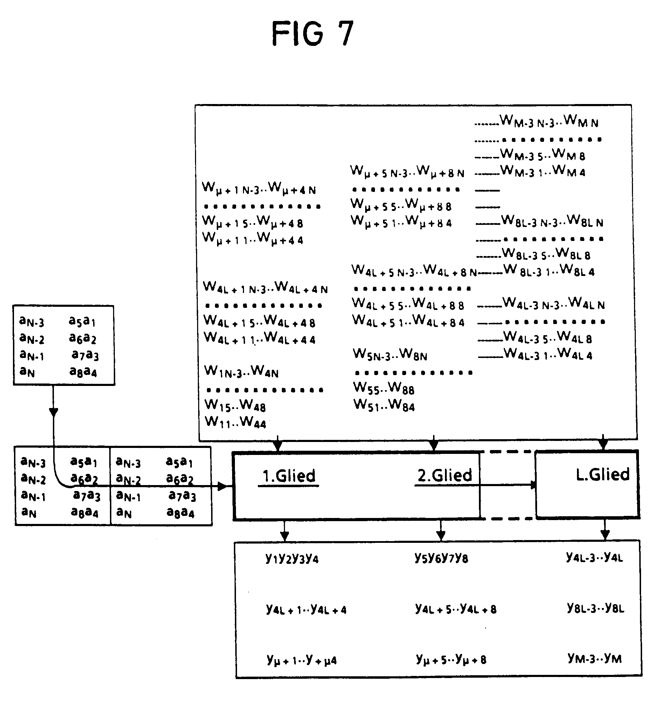

Nach $K = N/m$ Takten werden die Ausgangsvektoren $y_l...y_m$ über den Multiplexer in das erste Ausgangs-Register der ersten m-Neuron-Einheit gelesen. Die zweite Einheit schickt einen Takt später über den Multiplexer ihre Ausgangsvektoren $y_{m+1} ...y_{2m}$ in ihr erstes Ausgangs-Register. Zu diesem Zeitpunkt befinden sich $y_l...y_m$ im zweiten Ausgangs-Register der ersten m-Neuron-Einheit. Noch einen Takt später befinden sich $y_l...y_m$ bzw. $y_{m+1} ... y_{2m}$ im ersten Ausgangs-Register (der Multiplexer hat umgeschaltet) bzw. im zweiten Ausgangs-Register der zweiten m-Neuron-Einheit. Man erkennt, daß die L-gliedrige Kette zuerst die Ausgangsvektoren $y_{4L} - 3 ... y_{4L}$ und zuletzt $y_1 ...y_4$ ausgibt. Da im allgemeinen $M \neq 4L$ gilt, müssen die Eingangsvektoren M/4L-mal hintereinander in die Anordnung geschickt werden, bis alle Ausgangsvektoren $y_l...y_M$ vorliegen. Den Datenfluß des systolischen Neuro-Emulators zeigt Fig. 7 (aus Platzgründen sind die nicht-verzweigenden Eingänge $w_i b_i$ und die Schwellwerte $\theta_i$ nicht aufgeführt und wird von der Abkürzung $\mu = (M - I)/4L$ Gebrauch gemacht).

## Durchsatz und Rechenzeit des systolischen Neuro-Emulators

Da $(N/m) + L - 1$ Takte nötig sind, bis die ersten L M Ausgangsvektoren vorliegen, müssen noch weitere $(N/m) ((M/mL) - 1 )$ Takte abgewartet werden, bis auch der letzte Ausgangsvektor $y_M$ berechnet ist. Schließlich werden noch L Takte benötigt, um den letzten in der Anordnung befindlichen Ausgangsvektor an den Ausgang zu holen. Insgesamt ergibt sich für die Rechenzeit ein Ausdruck

$$Rechenzeit = \left| \frac{N \cdot M}{m^2} \cdot \frac{1}{L} + 2L - 1 \right| \cdot \Delta \qquad , \quad \Delta = Taktzeit \qquad (9)$$

Der Durchsatz ist durch den ersten Summanden in (9) bestimmt.

Mit $\Delta$ = 50 ns, L = 100 und m = 4 können somit $10^6$, $10^8$ bzw. $10^{10}$ Verbindungen in ca. 30 $\mu$s, 3 ms bzw. 300 ms gewichtet und diskriminiert werden.

### Schnittstellen und Speicherperipherie des Neuro-Emulators "Typ 2"

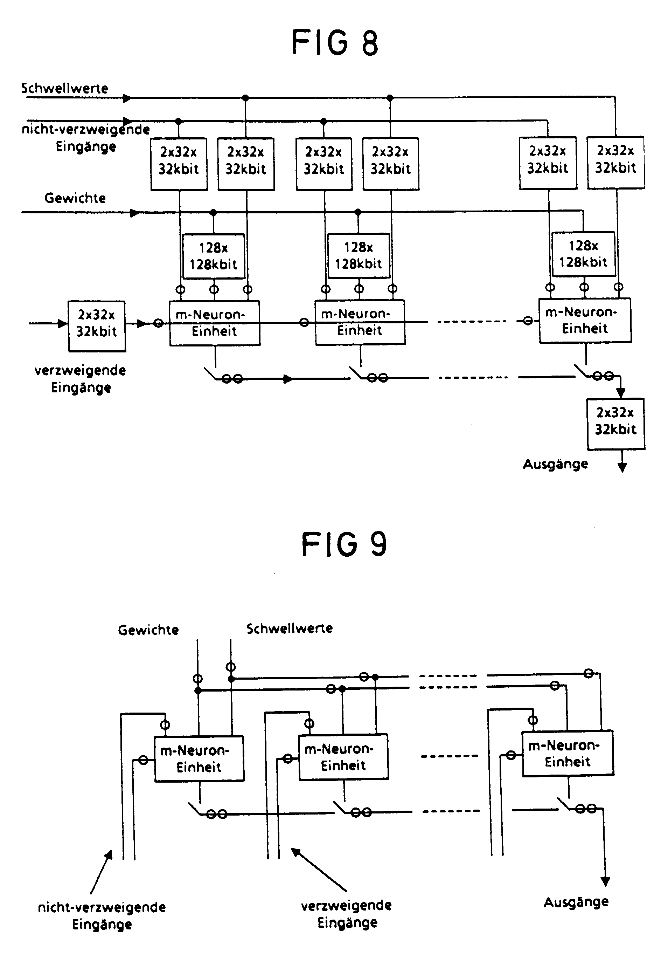

Der Neuro-Emulator "Typ 2" besteht aus 250 4-Neuron-Einheiten. Pro 4-Neuron-Einheit werden N M/250 Gewichte benötigt. Werden 128 x 128 kbit pro Einheit als lokaler Speicher vorgesehen, so können 5.24 x $10^8$ Verbindungen realisiert werden. Da der Akkumulator der 4-Neuron-Einheit für maximal 100 000 Eingangsvektoren die gewünschte 8-bit-Genauigkeit der Ausgangsvektoren gewährleistet, ergeben sich die in Fig. 8 gezeigten Schnittstellen und die ebenfalls an dieser Stelle gezeigte Speicherperipherie.

Besonders hervorzuheben ist, daß der Neuro-Emulator "Typ 2" mit derselben Anschlußstiftzahl für die Datenleitungen auskommt, wie der Neuro-Emulator "Typ 1". Gleichzeitig wartet der Neuro-Emulator "Typ 2" aber mit gegenüber dem Neuro-Emulator "Typ 1" wesentlich verbesserten Leistungsmerkmalen auf, siehe weiter unten.

Die 32 32kbit-Speicher sind doppelt vorgesehen, um Lese/Schreib-Operationen simultan ausführen zu können. Der Vorteil des lokalen Speichers für die Gewichte liegt, wie erwähnt, darin, daß die 250 Gewichtsspeicher seriell geladen werden können. Dies bedingt ein Vielfaches der Rechenzeit und ist unkritisch, da die Gewichte in der Erkennungsphase sich über lange Sequenzen von Eingangsvektoren nicht ändern.

Da in der Lernphase eines neuronalen Netzes sich die Gewichte $W_{ij}$ nach jedem Satz von N Eingangsvektoren um ein $\delta(W_{ij})$ ändern, muß andererseits bei der Entwicklung der Architektur des Grundbausteins für die Lernphase darauf geachtet werden, daß diese Änderungen $\delta(W_{ij})$ mit den Gewichten $W_{ij}$ intern verrechnet und über die Dauer der Lernphase aufakkumuliert werden. Nach Beendigung der Lernphase können dann die gelernten Gewichte $W'_{ij}$ in die Gewichtsspeicher geladen werden.

### Beispiele für den Einsatz des Neuro-Emulators "Typ 2"

Da der Neuro-Emulator "Typ 2" statt aus 4 aus 1000 Neuronen besteht, gelten die zuvor angestellten Betrachtungen. Darüberhinaus kann die Bidirektionalität der verzweigenden Eingänge des Emulators "Typ 1" (Fig. 1) und des Emulators "Typ 2" für eine vorteilhafte Realisierung einer eventuell nötigen Iteration mit dem Emulator "Typ 2" genutzt werden. Es ist, da die Ausgangsvektoren der systolischen Anordnung am anderen Anordnungsende als die Eingangsvektoren erscheinen, vorteilhaft, den vollständigen Satz der M Ausgangsvektoren an diesem Anordnungsende einspeisen zu können und in entgegengesetzter Richtung durch die Anordnung zu schicken. Der Datenfluß auf den verzweigenden Eingängen würde somit nach jeder Iteration die Richtung wechseln. Dies ist mit bidirektionalen Treibern und Registern zu erreichen.

### Leistungsmerkmale des Neuro-Emulators "Typ 2"

Der Neuro-Emulator "Typ 2"
- synthetisiert Netze beliebigen Typs mit maximal 100 000 Eingängen,
- bedarf der externen Programmierung der Gewichte und Schwellwerte und kann die Gewichte für 524 Millionen Verbindungen lokal speichern,
- enthält die bekannten Diskriminatorfunktionen,
- gestattet die Verzweigung oder Nicht-Verzweigung von Eingängen bzw. Ausgängen,
- ermöglicht die Rückkopplung der Ausgänge auf die (verzweigten oder nicht-verzweigten) Eingänge,
- weist einfache Schnittstellen zur begleitenden Entwicklungsumgebung auf,
- gewichtet und diskriminiert N Eingänge und M Ausgänge in $12 \cdot N \cdot M$ ps ($4 \leqq N$, $1000 \leqq M$).

### Mehrfache Ausnutzung der Gewichte

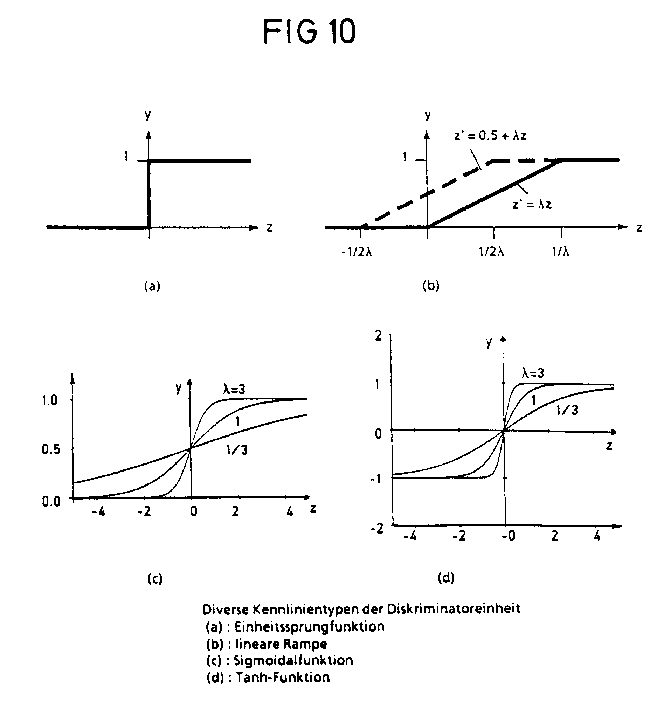

Für die parallele Verarbeitung von P verschiedenen Sätzen von Eingangsvektoren bietet sich die mehrfache Ausnutzung der Gewichte mit einer linearen systolischen Anordnung an, vergl. Fig. 9. Dieser Anwendungsfall tritt dann auf, wenn aus einer Vielzahl von hypothetischen Mustern das real existierende Muster erkannt werden soll (z.B. bei der Erkennung fließender Sprache).

Aus Fig. 9 ist ersichtlich, daß die Eingangsvektoren einer m-Neuron-Einheit um einen Takt gegenüber denen der vorangehenden Einheit verzögert werden müssen. Offensichtlich ist der Durchsatz der Anordnung P-mal höher als der mit einer einzigen (mit derselben Aufgabenstellung betrauten) m-Neuron-Einheit zu erzielende. Die Gestaltung der Schnittstellen und der Speicherperipherie sowie die Auswertung der Leistungsmerkmale dieser systolischen Anordnung kann jeweils dem Fachmann überlassen bleiben.

Schaltungsentwurf der Diskriminator-Einheit

Diskriminatorfunktionen für neuronale Netze

Aufgabe der Diskriminator-Einheit ist es, die nichtlineare Übertragungsfunktion des Neurons zu realisieren. Um ein Höchstmaß an Flexibilität zu erzielen, sind in dieser Einheit alle für neuronale Netze wichtigen Übertragungscharakteristiken enthalten. Das Eingangssignal z des Diskriminators (Ausgang des Akkumulators AKK in Fig. 1) ist mit 32 Bit in Zweierkomplementdarstellung kodiert, wobei das niederstwertige Bit den Stellenwert $2^{-14}$ hat. In der Diskriminator-Einheit werden folgende nichtlineare Diskriminator-Funktionen realisiert:

Fig. 10a

binärer Entscheider

$$y(z) = \begin{cases} 1 & \text{für } z \geq 0 \\ 0 & \text{für } z < 0 \end{cases} \qquad \text{Einheitssprung-funktion} \qquad (10a)$$

Fig. 10b Rampen-funktionen

$$y(z) = \begin{cases} 1 & \text{für } z' > 1 \\ z' & \text{für } 0 \leq z' \leq 1 \\ 0 & \text{für } z' < 0 \end{cases} \qquad \begin{array}{l} \text{mit} \\ z' = \lambda z \\ \text{oder} \\ z' = 0.5 + \lambda z \end{array} \qquad (10b)$$

Fig. 10c Sigmoidal-funktion

$$y(z) = [\ 1 + \exp(-\lambda z)\ ]^{-1} \qquad (10c)$$

Für diese Funktionen ist das Ausgangssignal y stets gleich oder größer als Null. Mit Hilfe der Transformation $y \to 2y - 1$ kann der Wertebereich (0, 1) auf (-1, 1) abgebildet werden. Aus der Sigmoidalfunktion (10c) wird dann

$$\text{Fig. 10d} \qquad y(z) = \tanh(\lambda z). \qquad (10d)$$

Durch Veränderung des Parameters $\lambda (\lambda > 0)$ kann die Steilheit der Rampenfunktion, der Sigmoidalfunktion und der Hyperbelfunktion verändert werden (vergl. Fig. 10b, c, d). Der Wertebereich von $\lambda$ ist so gewählt, daß die Kurven sowohl steiler ($\lambda > 1$) als auch flacher ($\lambda < 1$) im Vergleich zu einer Bewertung mit 1 verlaufen können. Ferner kann mit Hilfe des Parameters der Wertebereich der Gewichtsfaktoren verändert werden. Der Wert von $\lambda$ ist mit 32 Bit kodiert, wobei das kleinste Stellengewicht $2^{-16}$ beträgt, es gilt demnach

$$\lambda = \delta_{31} \cdot 2^{15} + \delta_{30} \cdot 2^{14} + \ldots + \delta_1 \cdot 2^{-15} + \delta_0 \cdot 2^{-16}$$
$$= 2^{15} \{\delta_{31} + \delta_{30} \cdot 2^{-1} + \ldots + \delta_1 \cdot 2^{-30} + \delta_0 \cdot 2^{-31}\},$$

wobei die $\delta_1$ die einzelnen Stellengewichte darstellen. Der Zahlenbereich erstreckt sich also von 0 bis + 32768 - $2^{-16}$.

Aufbau der Diskriminator-Einheit

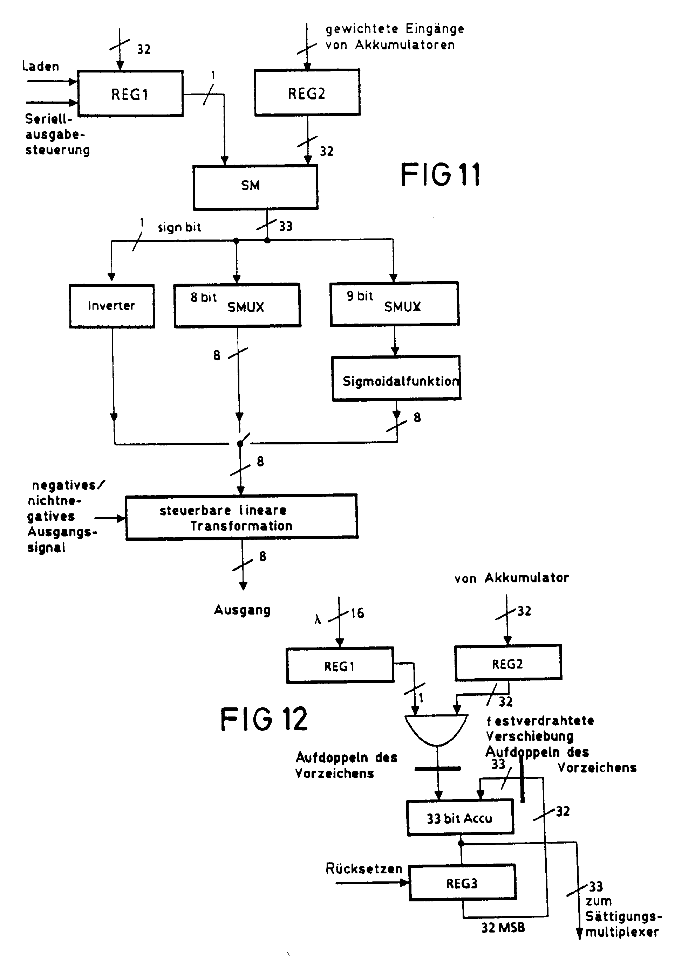

Das Blockschaltbild der Diskriminator-Einheit ist in Fig. 11 gezeigt. Die Konstante $\lambda$ und der Zahlenwert von z sind in Registern REG1 und REG2 gespeichert. REG1 wird seriell ausgelesen, und in der nachfolgenden seriellen Multiplikationseinheit wird die Multiplikation mit z ausgeführt. Es folgt eine Reduzierung des Zahlenformats auf die erforderliche Wortbreite mit Hilfe von Sättigungsmultiplexern. Im Falle des binären Entscheiders braucht nur das Vorzeichen-Bit weitergeleitet zu werden. Bei der Auswahl der Rampenfunktion wird das Ausgangssignal des Sättigungsmultiplexers unverändert weitergeleitet, während bei der Sigmoidalfunktion und der TANH-Funktion in einer weiteren Einheit eine Geradenapproximation durchgeführt wird. In dem letzten Block schließlich wird die lineare Zahltransformation für die Generierung von negativen Ausgangszahlenwerten durchgeführt.

## Serielle Multiplikationseinheit

Die Multiplikation des Signals z mit dem Parameter $\lambda$ erfolgt in einer seriellen Multiplizierer-Einheit. Der in dem Register gespeicherte Zahlenwert wird seriell beginnend mit dem niederstwertigen Bit ausgelesen und der Multiplikations-Einheit zugeführt (vergl. Fig. 12).

Die Multiplikation erfolgt nach dem sog. Horner-Schema (vergleiche L. Gazsi: Hardware implementation of wave digital filters using programmable digital signal processors. Proc. 1981 Europ. Conf. on Circuit Theory and Design, S. 1052-1057. The Hague, Aug. 1981:

$$\lambda z = 2^{15}\{\delta_{31}z + 2^{-1}(\delta_{30}z + ... + 2^{-1}(\delta_2 z + 2^{-1}(\delta_1 z + 2^{-1}\delta_0 z))...)\} \quad (11)$$

Die Multiplikation von z mit $\delta_i$, i = 0 bis 31, wird mit einem UND-Glied realisiert (Fig. 12). Da die bei der Multiplikation entstehenden zusätzlichen niederwertigen Bits ("rear-bits") in der Weiterverarbeitung nicht benötigt werden, braucht die Akkumulator-Wortlänge zur Berechnung der Partialsummen nur um ein Frontbit erweitert zu werden. Vor der Berechnung von $\lambda z$ muß das vorgesehene Akkumulatorregister REG3 rückgesetzt werden (Reset-Signal in Fig. 12). Im ersten Zyklus wird dann der erste Term, $\delta_0 z$, im Akkumulatorregister REG3 abgelegt. Die Rückführung zum Addierer erfolgt über einen fest verdrahteten "Rechts-Shift" um eine Position, wobei das Vorzeichen aufgedoppelt wird (arithmetischer Shift, Multiplikation der Partialsumme mit $2^{-1}$). Im nächsten Zyklus wird das Ergebnis ($2^{-1}\delta_0 z$) zu $\delta_1 z$ hinzuaddiert. Dieser Vorgang wiederholt sich, bis nach 32 Zyklen die geschweifte Klammer in Gl. (11) berechnet ist. Die Multiplikation mit $2^{15}$ erfolgt ebenfalls mit einem festverdrahteten Shift.

## Sättigungsmultiplexer

Das Ergebnis liegt nun in einer Wortbreite von 33 Bit vor, der darstellbare Zahlenbereich reicht von $-2^{24}$ bis $2^{24} - 2^{-7}$, das LSB hat eine Wertigkeit von $2^{-7}$. Das Ausgangssignal des Diskriminators soll aber auf 8 Bit Wortbreite beschränkt sein. Bei dem binären Entscheider genügt letztlich die Abfrage des Vorzeichens, hingegen muß bei der Rampenfunktion die Wortbreite unter Anwendung einer Sättigungscharakteristik auf 8 Bit beschränkt werden. Es sei $z' = \lambda z$ das Eingangssignal des betreffenden Sättigungsmultiplexers und $z_r'$ das Ausgangssignal; dann läßt sich die Sättigungscharakteristik beschreiben durch

$$z_r' = \begin{cases} 1 - 2^{-7} & \text{für } z' \geq 1 - 2^{-7} \quad (0.1111111) \\ 0 & \text{für } z' \leq 0 \quad (0.0000000) \\ z' & \text{sonst} \end{cases} \quad (12)$$

Die Berechnung der Sigmoidalfunktion erfolgt durch Geradenabschnitte. Anstelle von Gl. (10c) läßt sich schreiben:

$$y(z') = 0.5 + 0.5 \tanh(z'/2). \quad (13)$$

Da der zweite Term in (13) eine ungerade Funktion in z' ist, genügt es, diesen Term für positive Werte von z' durch Geradenabschnitte zu approximieren. Bei der Approximation soll der Fehler kleiner als ein LSB, also kleiner als $2^{-7}$ sein. Eine Genauigkeitsabschätzung ergibt, daß der Zahlenbereich von z' auf das Intervall (-8,8) beschränkt werden kann und daß die Wertigkeit des niederstwertigen Bits nicht größer als $2^{-5}$ sein darf. Daraus folgt, daß für die Zahlendarstellung von z' mindestens 9 Bit erforderlich sind. Dementsprechend ist ein zweiter Sättigungsmultiplexer erforderlich, dessen Sättigungscharakteristik durch

$$z_s' = \begin{cases} 8 - 2^{-5} & \text{für } z' \geq 8 - 2^{-5} \\ -8 + 2^{-5} & \text{für } z' \leq -8 + 2^{-5} \\ z' & \text{sonst} \end{cases} \quad (14)$$

gegeben ist. Die Größe $z_s'$ bezeichnet dabei das Ausgangssignal dieses Sättigungsmultiplexers.

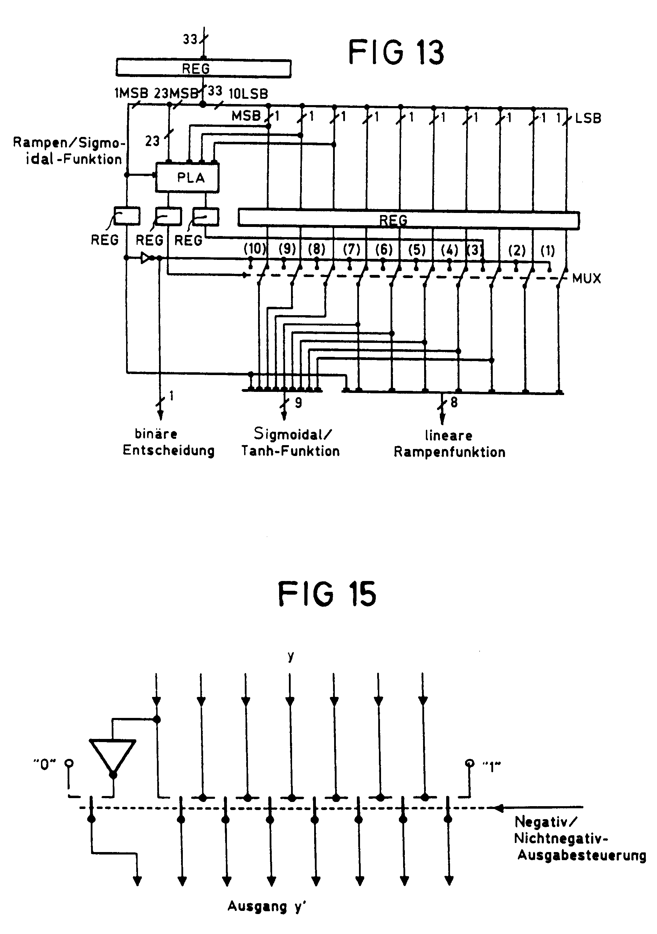

Eine gemeinsame Realisierung der beiden Funktionen ist in Fig. 13 gezeigt. Da das LSB von $z'$ die Wertigkeit $2^{-7}$ hat, müssen bei Anwendung der Rampenfunktion gerade die sieben niederwertigen Bits ausgewählt werden. Falls $z' \geqq 1 - 2^{-7}$, d.h., falls das Vorzeichen-Bit 0 ist und mindestens eins der übrigen 25 führenden Bits 1 ist, sollen alle Ausgangs-Bits mit Ausnahme des Vorzeichens auf 1 gesetzt werden. Dies erfolgt mit Hilfe von Multiplexern MUX(1) bis MUX(7). Die links gezeichneten Eingänge mit Ausnahme von MUX(3) werden in diesem Fall durch das invertierte Vorzeichen-Bit auf 1 gesetzt, während der entsprechende Eingang von MUX(3) von dem vorgesehenen PLA (programmierbare logische Anordnung) auf 1 gesetzt wird. Die Umschaltung der Multiplexer wird ebenfalls von diesem PLA gesteuert. Entsprechendes gilt für $z' < 0$, d.h., falls das Vorzeichen-Bit gleich 1 ist und mindestens eins der übrigen 25 führenden Bits 0 ist. In diesem Fall sollen alle Ausgangs-Bits auf 0 gesetzt werden.

Für die Generierung der Sigmoidalfunktion und der TANH-Funktion müssen das MSB und die übrigen 22 Bits untersucht werden, um festzustellen, ob eine Wertebereichsüberschreitung vorliegt. Das Ausgangssignal wird nun mit Hilfe der Multiplexer MUX(3) bis MUX(10) gebildet, wobei das LSB bei Sättigung stets 1 ist (vergl. Gl. (14)), während die übrigen Bits in der gleichen Weise gebildet werden wie zuvor.

Realisierung der Sigmoidal-Funktion

Wie schon zuvor erwähnt, soll der zweite Term in (13), $g(z') = 0.5 \tanh(z'/2)$, für positive Werte von $z'$ durch Geradenabschnitte approximiert werden, wobei der Fehler kleiner als $2^{-7}$ sein soll. Für eine Berechnung bei negativen Werten von $z'$ ist eine Vorzeichen-Betrags-Zahlendarstellung erforderlich. Der Ausgangswert y ist dann gegeben durch

$$y = 0.5 + \text{sign}(z') \cdot m_1 \cdot |z'| \qquad \text{im ersten Intervall,}$$
$$y = 0.5 + \text{sign}(z') \cdot \{m_1 \cdot z_1' + m_2(|z'| - z_1')\} \qquad \text{im zweiten Intervall,}$$
$$y = 0.5 + \text{sign}(z') \cdot \{m_1 \cdot z_1' + m_2(z_2' - z_1') + \dots m_{i-1}(Z_{i-1}' - Z_{i-2}') + m_i(|z'| - z_{i-1}')\} \qquad \text{im i-ten Intervall,}$$

wobei $\text{sign}(z')$ die Signum-Funktion und die $z_1'$ die zugehörigen oberen Intervallgrenzen bezeichnen.

Dies läßt sich zusammenfassen in

$$y = 0.5 + \text{sign}(z') \cdot |C_i + m_i(|z'| - z_{i-1}')| \qquad \text{für } z_{i-1}' \leqq z' \leqq z_i', \ i = 1,\dots,k \qquad (15a)$$

$$C_i = \sum_{j=1}^{i-1} m_j (z_j' - z_{j-1}'), \quad z_0' = 0, \qquad (15b)$$

wobei k die Gesamtanzahl der Intervalle ist. Für den Fall, daß alle Intervalle die gleiche Länge $\Delta z' = z_1' - z_{1-1}'$ haben und außerdem gleich einer Zweierpotenz sind, gilt

$$\Delta z' = z_i' - z_{i-1}' = 2^L, \qquad (16a)$$
$$z_i' = i \cdot 2^L, \ i = 0,\dots,k, \qquad (16b)$$
$$y = 0.5 + \text{sign}(z') \cdot [C_i + m_i(|z'| - (i-1)2^L)], \qquad (16c)$$

$$C_i = 2^L \sum_{j=1}^{i-1} m_j. \qquad (16d)$$

Bei der Vorzeichen-Betrags-Zahlendarstellung von $z'$ enthalten die niederwertigen Bits bis einschließlich der Position $2^{L-1}$ gerade den Term $(|z'| - (i-1) 2^L)$, während die übrigen höherwertigen Bits (ohne Vorzeichen) das Segment kennzeichnen. Hierdurch wird eine schaltungstechnische Realisierung sehr vereinfacht. Die Zahlenwerte von $z_i$ und $m_i$ können in einem ROM abgespeichert werden, das direkt von diesen höherwertigen Bits adressiert wird. Die Multiplikation von $m_i$ mit dem Term $|(z' - (k-1) 2^L)|$ und die Addition zu $C_i$ kann seriell durchgeführt werden. Je nach Vorzeichen von $z'$ wird das Ergebnis zu 0.5 hinzuaddiert oder davon subtrahiert.

Im vorliegenden Fall genügen k = 8 Segmente mit einer Länge $\Delta z' = 1$, um einen kleinen Fehler kleiner als $2^{-7}$ zu garantieren. Wegen dieser geringen Anzahl von Termen ist es schaltungstechnisch vorteilhafter, anstelle eines ROM ein PLA zu verwenden.

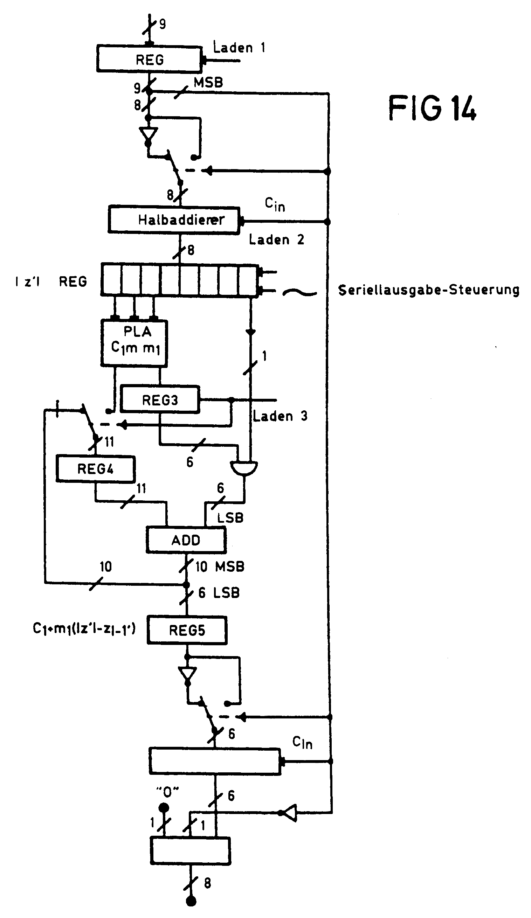

Eine schaltungstechnische Realisierung ist in Fig. 14 gezeigt. Zunächst wird die mit 9 Bits im Zweierkomplement kodierte Zahl $z'$ in eine Vorzeichen-Betrags-Darstellung gewandelt. Hierzu wird zunächst der Betrag von $z'$ gebildet, während das Vorzeichenbit unverändert bleibt. Der Betrag wird in dem 8-bitbreiten Register REG2 abgelegt. Die drei höherwertigen Bits dieses Registers (Segmentkennung) werden für den Aufruf von $C_i$ und $m_i$ benötigt, $C_i$ wird über den Multiplexer MUX2 in ein Akkumulator-Register REG4, $m_i$ in REG3 geladen. Die niederwertigen 5 Bits des Registers REG2 werden anschließend, beginnend bei dem LSB, seriell ausgelesen. Mit Hilfe des UND-Gliedes wird in jedem Zyklus ein Partialprodukt berechnet und zum Akkumulatorinhalt addiert. Das Ergebnis wird nach jedem Zyklus über einen festverdrahteten "Shift" um eine Stelle nach rechts geschoben und im Akkumulatorregister REG4 abgelegt. Nach 5 Zyklen steht das Ergebnis $C_i + m_i$ ($z'$ - (i -1) $2^L$) in einem Register REG5 zur Verfügung. In der nachfolgenden Stufe wird dieser Zahlenwert zu 0.5 hinzuaddiert, bzw. bei negativen $z'$, davon subtrahiert.

Erzeugung von Diskriminator-Kennlinien mit negativen Zahlenwerten

Mit den bisher beschriebenen Schaltungseinheiten können nur unipolare (nichtnegative) Ausgangssignale erzeugt werden. In manchen Fällen sind jedoch Diskriminator-Kennlinien erwünscht, die symmetrisch zum Koordinatenursprung liegen. Bei dem binären Entscheider und bei der Sigmoidal-Funktion genügt die Abbildung des Intervalls (0, 1) auf (-1, 1) durch eine lineare Transformation, bei der Rampenfunktion muß hingegen darauf geachtet werden, daß in der seriellen Multiplizierereinheit $z' = 0.5 + \lambda z$ gerechnet wird. Dies läßt sich einfach dadurch erreichen, daß der Akkumulator mit dem "Reset"-Signal nicht auf 0, sondern auf den Wert 0.5 gesetzt wird.

Da das Diskriminator-Ausgangssignal mit 8 Bits in Zweierkomplement-Darstellung kodiert ist, ist die größte darstellbare Zahl $1 - 2^{-7}$. Es bestehen dabei 128 Quantisierungsstufen. Um eine symmetrische Kennlinie zu erhalten, muß daher der Zahlenbereich von 0 bis zu dieser Zahl auf den Bereich von $-1 + 2^{-7}$ bis $1 - 2^{-7}$ abgebildet werden, wobei die Zahl der Quantisierungsstufen unverändert bleibt. Diese Abbildung geschieht durch die Transformation.

$$y' = 2y - 1 + 2^{-7} \quad (17)$$

Die schaltungstechnische Realisierung (Fig. 15) besteht im wesentlichen aus einem Multiplexer. Die Multiplikation mit 2 wird sehr einfach durch einen festverdrahteten Links-Shift und die Addition von $2^{-7}$ durch eine 1 am niederstwertigen Multiplexereingang durchgeführt. Lediglich für die Addition von -1 ist eine Invertierung des höchstwertigen Bits erforderlich.

**Patentansprüche**

1. Digitaler Grundbaustein mit m Neuronen zum Aufbau künstlicher neuronaler Netze mit N Eingängen und M Ausgängen,
   - bei dem jedes Neuron aus einer Spalte von m Multiplizierern (MUL1 bis MUL4), zwei Addierern (ADD), einem Akkumulator (AKK), zwei Multiplexern (MUX) und einem Diskriminator aufgebaut ist,
   - bei dem die Kennlinien aller Diskriminatoren nach Wahl durch Änderung der Inhalte entsprechender Register (REG) verändert werden können,
   - bei dem m verzweigende Eingänge (E1 ... E4) vorgesehen sind, von denen jeder an jeweils m Multiplizierer, nämlich an jeweils einen Multiplizierer eines jeden der m Neuronen eingangsseitig angeschlossen ist,
   - bei dem m nicht verzweigende Eingänge ($w_i b_i$) vorgesehen sind, von denen jeder einem zweiten der beiden Addierer jeweils eines der m Neuronen eingangsseitig angeschlossen ist,
   - bei dem jeder dieser Multiplizierer sein Eingangssignal (E1 ... E4) mit einem von m x m Gewichtskoeffizienten multipliziert,
   - bei dem der erste der beiden Addierer jedes Neurons die Ausgänge der Multiplizierer dieses Neurons addiert,
   - bei dem der zweite Addierer jedes Neurons einen von m Schwellwerten zu jeweils einem der m nicht verzweigenden Eingänge addiert, und
   - bei dem die Ergebnisse des ersten Addierers über den Akkumulator jedes Neurons dem Diskriminator des jeweiligen Neurons zugeführt werden, welcher den diesem Neuron entsprechenden Ausgangswert der m Ausgangswerte des Grundbausteins ermittelt,
   - bei dem der Ergebnisausgang des Akkumulators über den ersten Multiplexer (MUX) entweder dem Diskriminator zugeführt wird, oder aber dem zweiten Muliplexer, und
   - bei dem einem zweiten Eingang des Akkumulators mit Hilfe des zweiten Multiplexers entweder das Ausgangssignal des zweiten Addierers oder das Ausgangssignal des ersten Multiplexers zur Bildung eines Akkumulationspfades zugeführt werden kann.

EP 0 349 820 B1

**2.** Digitaler Grundbaustein nach Anspruch 1,
dessen Diskriminator eine Kennlinie besitzt, deren Charakteristik wahlweise eine Sprungfunktion (Fig. 10a) eine lineare Rampenfunktion (Fig. 10b), eine Sigmoidalfunktion (Fig. 10c) oder eine hyperbolische Tangensfunktion (tanh) (Fig. 10d) ist.

**3.** Digitalter Grundbaustein nach einem der vorhergehenden Ansprüche,
welcher Register (REG1, REG2) zur Speicherung von Daten umfaßt, denen eine serielle Multiplikationseinheit (SM) nachgeschaltet ist, deren Ausgänge zur Begrenzung des Zahlenformats des Multiplikationsergebnisses mit den Eingängen dafür vorgesehener Sättigungsmultiplexer (SMUX) verbunden sind.

**4.** Digitaler Grundbaustein nach einem der vorhergehenden Ansprüche mit m = 4.

**5.** Netzwerkarchitektur zur Emulation künstlicher neuronaler Netze mit N Eingängen und M Ausgängen, bei der eine Vielzahl L von digitalen Grundbausteinen nach einem der vorhergehenden Ansprüche in systollischer Weise miteinander verbunden sind.

**6.** Netzwerkarchitektur nach Anspruch 5,
bei der die Eingangssignale nachfolgender Grundbausteine gegenüber den Eingangssignalen vorhergehender Grundbausteine seitlich verzögert sind.

**7.** Netzwerkarchitektur nach einem der vorhergehenden Ansprüche, **dadurch gekennzeichnet,**
daß mittels der Neuronen ein sogenanntes Instar-Netz gebildet ist.

**8.** Netzwerkarchitektur nach einem der Ansprüche 1 bis 6,
**dadurch gekennzeichnet,**
daß mittels der Neuronen ein sogenanntes Outstar-Netz gebildet ist.

**9.** Netzwerkarchitektur nach einem der Ansprüche 1 bis 6,
**dadurch gekennzeichnet,**
daß mittels der Neuronen ein sogenanntes Feedforward-Multilayer-Perceptron gebildet ist.

**10.** Netzwerkarchitektur nach einem der Ansprüche 1 bis 6,
**dadurch gekennzeichnet,**
daß mittels der Neuronen ein sogenanntes Hopfield-Netz gebildet ist.

**Claims**

**1.** Digital basic module having m neurons for constructing artificial neural networks having N inputs and M outputs,
   - in which each neuron is constructed from a column of m multipliers (MUL1 to MUL4), two adders (ADD), an accumulator (AKK), two multiplexers (MUX) and a discriminator,
   - in which the characteristic curves of all the discriminators can be varied optionally by changing the contents of corresponding registers (REG),
   - in which m branching inputs (E1... E4) are provided, of which each is respectively connected on the input side to m multipliers, specifically to in each case one multiplier of each of the m neurons,
   - in which m non-branching inputs ($w_i b_i$) are provided, of which each is connected on the input side to a second one of the two adders of in each case one of the m neurons,
   - in which each of these multipliers multiplies its input signal (E1... E4) by one of m x m weighting coefficients,
   - in which the first of the two adders of each neuron adds the outputs of the multipliers of this neuron,
   - in which the second adder of each neuron adds one of m threshold values to in each case one of the m non-branching inputs, and
   - in which the results of the first adder are fed via the accumulator of each neuron to the discriminator of the respective neuron, which determines the output value, corresponding to this neuron, of the m output values of the basic module,
   - in which the result output of the accumulator is fed via the first multiplexer (MUX) either to the discriminator or else to the second multiplexer, and
   - in which either the output signal of the second adder or the output signal of the first multiplexer can

13

be fed to a second input of the accumulator with the aid of the second multiplexer for the purpose of forming an accumulation path.

2. Digital basic module according to Claim 1, of which the discriminator has a characteristic curve whose characteristic is optionally a jump function (Figure 10a), a linear ramp function (Figure 10b), a sigmoidal function (Figure 10c) or a hyperbolic tangent function (tanh) (Figure 10d).

3. Digital basic module according to one of the preceding claims, which comprises registers (REG1, REG2) for storing data connected downstream of which is a serial multiplication unit (SM) whose outputs are connected for the purpose of limiting the numerical format of the multiplication result to the inputs of saturation multiplexers (SMUX) provided for this purpose.

4. Digital basic module according to one of the preceding claims with m = 4.

5. Network architecture for emulating artificial neural networks having N inputs and M outputs, in which a multiplicity L of digital basic modules according to one of the preceding claims are connected to one another in a systolic fashion.

6. Network architecture according to Claim 5, in which the input signals of subsequent basic modules are temporarily delayed with respect to the input signals of preceding basic modules.

7. Network architecture according to one of the preceding claims, characterized in that a so-called instar network is formed by means of the neurons.

8. Network architecture according to one of Claims 1 to 6, characterized in that a so-called outstar network is formed by means of the neurons.

9. Network architecture according to one of Claims 1 to 6, characterized in that a so-called feedforward multilayer perceptron is formed by means of the neurons.

10. Network architecture according to one of Claims 1 to 6, characterized in that a so-called Hopfield network is formed by means of the neurons.

**Revendications**

1. Module de base numérique comportant m neurones pour l'établissement de réseaux neuroniques artificiels comportant N entrées et M sorties, et dans lequel
    - chaque neurone est constitué par une colonne contenant m multiplicateurs (MUL1 à MUL4), deux additionneurs (AD2), un accumulateur (AKK), deux multiplexeurs (MUX) et un discriminateur,
    - des courbes caractéristiques de tous les discriminateurs peuvent être modifiées au choix, par modification des contenus de registres correspondants (REG),
    - m entrées de ramification (E1...E4) sont prévues, chacune d'elles étant raccordée côté entrée respectivement à m multiplicateurs, à savoir respectivement à un multiplicateur de chacun des m neurones,
    - m entrées non ramificatrices ($w_ib_l$) sont prévues, chacune d'elles étant raccordée, côté entrée, à un second des deux additionneurs respectivement de l'un des m neurones,
    - chacun de ces multiplicateurs multiplie son signal d'entrée (E1...E4) par l'un de m x m coefficients de pondération,
    - le premier des deux additionneurs de chaque neurone additionne les signaux de sortie des multiplicateurs de ce neurone,
    - le second additionneur de chaque neurone ajoute l'une des m valeurs de seuil à respectivement l'une des m entrées non ramificatrices, et
    - les résultats du premier additionneur sont envoyés, par l'intermédiaire de l'accumulateur de chaque neurone, au discriminateur du neurone considéré, qui détermine la valeur de sortie, qui correspond à ce neurone, des m valeurs de sortie du module de base,
    - la sortie du résultat du commutateur est envoyée, par l'interémdiaire du premier multiplexeur (MUX), soit au discriminateur, soit au second multiplexeur, et
    - soit le signal de sortie du second additionneur, soit le signal de sortie du premier multiplexeur peut être envoyé à une seconde entrée de l'accumulateur, à l'aide du second multiplexeur, pour la formation d'une voie d'accumulation.

2. Module de base suivant la revendication 1, dont le discriminateur possède une courbe caractéristique, dont la caractéristique est au choix une fonction de saut (figure 10a) ou une fonction en rampe linéaire (figure 10b), une fonction sigmoïdale (figure 10c) ou une fonction tangente hyperbolique (tanh) (figure 10d).

3. Module de base suivant l'une des revendications précédentes, qui comporte des registres (REG1,REG2) pour la mémorisation de données et en aval desquels est branchée une unité de multiplication série (SM), dont les sorties sont reliées, pour limiter le format des chiffres du résultat de la multiplication, aux entrées de multiplexeurs de saturation (SMUX) prévus à cet effet.

4. Module de base suivant l'une des revendications précédentes, avec m = 4.

5. Architecture de réseau pour l'émulation de réseaux neuroniques artificiels comportant N entrées et M sorties, dans laquelle une multiplicité formée de L modules de base numérique selon l'une des revendications précédentes sont reliés entre eux selon un mode systolique.

6. Architecture de réseau suivant la revendication 5, dans laquelle les signaux d'entrée de modules de base suivants sont retardés par rapport aux signaux d'entrée de modules de base précédents.

7. Architecture de réseau suivant l'une des revendications précédentes, caractérisée par le fait que ce qu'on appelle un réseau Instar est formé au moyen des neurones.

8. Architecture de réseau suivant l'une revendications 1 à 6, caractérisée par le fait qu'un réseau dit Outstar est formé au moyen des neurones.

9. Architecture de réseau suivant l'une des revendications 1 à 6, caractérisée par le fait que ce qu'on appelle un Feedforward-Multilayer-Perceptron est formé au moyen des neurones.

10. Architecture de réseau suivant l'une des revendications 1 à 6, caractérisée par le fait que ce qu'on appelle un réseau Hopfield est formé au moyen des neurones.

EP 0 349 820 B1

# FIG 1

# FIG 2

# FIG 3

FIG 4

a)

b)

c)

N Eingänge

H versteckte Neuronen

M Ausgänge

d)

$N = M = 4$

**FIG 5**

**FIG 6**

# FIG 7

# FIG 8

Schwellwerte

nicht-verzweigende
Eingänge

| 2x32x 32kbit | 2x32x 32kbit | | 2x32x 32kbit | 2x32x 32kbit | | 2x32x 32kbit | 2x32x 32kbit |

Gewichte

| 128x 128kbit | | 128x 128kbit | | 128x 128kbit |

| 2x32x 32kbit | | m-Neuron-Einheit | m-Neuron-Einheit | | m-Neuron-Einheit |

verzweigende
Eingänge

| 2x32x 32kbit |

Ausgänge

# FIG 9

Gewichte     Schwellwerte

| m-Neuron-Einheit | m-Neuron-Einheit | | m-Neuron-Einheit |

nicht-verzweigende
Eingänge

verzweigende
Eingänge

Ausgänge

# FIG 10

(a)

(b)

(c)

(d)

Diverse Kennlinientypen der Diskriminatoreinheit
(a) : Einheitssprungfunktion
(b) : lineare Rampe
(c) : Sigmoidalfunktion
(d) : Tanh-Funktion

FIG 11

FIG 12

# FIG 13

Rampen/Sigmoidal-Funktion

PLA

REG REG REG

binäre Entscheidung

Sigmoidal/Tanh-Funktion

lineare Rampenfunktion

# FIG 15

y

"0"  "1"

Negativ/Nichtnegativ-Ausgabesteuerung

Ausgang y'

FIG 14